(19) Europäisches Patentamt
European Patent Office
Office européen des brevets

(11) Publication number: **0 464 522 A2**

# (12) EUROPEAN PATENT APPLICATION

(21) Application number: **91110270.5**

(51) Int. Cl.$^5$: **C08G 63/672**, C08G 63/685

(22) Date of filing: **21.06.91**

(30) Priority: **30.06.90 KR 909811**

(43) Date of publication of application:
**08.01.92 Bulletin 92/02**

(84) Designated Contracting States:
**DE FR IT**

(71) Applicant: **CHEIL SYNTHETICS INC.**
**1, Chungsan-Dong**
**Kyungsan-city, Kyungsang buk-Do(KR)**

(72) Inventor: **Kim, Kwang tae**
**Hanbo Meedo Apartment 101-707, 452**
**Daechi-Dong**
**Kangnam-Ku, Seoul(KR)**
Inventor: **Ihm, Dae Woo**
**Sangah Apartment 3-907, 165 Ohkum-Dong**
**Songpa-Ku, Seoul(KR)**
Inventor: **Baek, Moon soo**
**1662-7, Sinlim 8-Dong**
**Kwanak-Ku, Seoul(KR)**
Inventor: **Lee, Young Choon**
**Jugong 3 cha Apartment 347-104,**
**Banpo-Dong**
**Seocho-Ku, Seoul(KR)**

(74) Representative: **Hering, Hartmut, Dipl.-Ing.**
**Patentanwälte Berendt, Leyh & Hering**
**Innere-Wiener-Strasse 20**
**W-8000 München 80(DE)**

## (54) Copolyester elastomer having good weather resistance.

(57) A copolyester elastomer having superior, i.e. increased, weather resistance which comprises copolymerizing a benzotriazole light stabilizer, such as 2-(2H-benzotriazole-2-yl)-4-methyl-6-dodecylphenol with a polyether glycol. A light-stabilized copolyester elastomer produced by the present invention shown to have superior weather resistance. Also the process time may be shortened and thus the manufacturing costs may be reduced.

EP 0 464 522 A2

The present invention relates to a copolyester elastomer showing superior weather resistance wherein stable units such as derived from liquid benzotriazole compounds are linked to a polyether glycol main chain. More particularly the invention relates to copolyester elastomers which can be utilized for outdoor purposes for a long time when molded.

At present, many kinds of copolyester elastomers molded to various types of sheet or film has been used as hose, belt, sports articles, etc.. These polymers should show little or no change of appearance or physical properties when used. However, the molded articles existing are readily reduced in their physical properties or decomposed when they are exposed to external conditions such as heat, moisture and ultraviolet light.

Extensive studies have been made on the improvement of the weather resistance of the polymers. However, the conventional stabilizers or their composition have failed in preventing effectively surface decomposition and deterioration of the physical properties in the polymers to be used for long lasting outdoor purposes.

In JP-A-50-91652 and EP-A 0 003 809 the effect of the various additives for the improvement of weather resistance of the copolyester elastomer were disclosed. However, the above mentioned processes lacked consideration on the decomposition of the resin and the incorporation of the stabilizer so that the decomposition of the resin was accelerated, or the discoloration or pollution took place due to reduced dispersibility. Thus many negative effects created problems in the manufacture of such copolyesters.

It was discovered that when certain benzotriazole compounds such as the liquid type of light stabilizer, 2-(2H-benzotriazole-2-yl)-4-methyl-6-dodecylphenol was linked to a polyether glycol and then incorporated into a copolyester together with a heat-antioxidant, the dipersibility and the weather resistance can be improved as compared with incorporation of the conventional powder type of light stabilizer. This invention has been completed on the basis of this discovery.

The light-stabilized copolyester elastomer of the invention is hardly decomposed on the exposure of the light. Thus, as the ASTM G23 method is employed in determining weather resistance of the elastomer, it is shown that the physical properties thereof and particularly, the reduction rate of the tensile strength is remarkably lowered. The copolyester elastomer of the present invention is characterized in that the required time for its initial tensile strength to be lowered to 50% is over 200 hours.

It is preferable to use an aromatic dicarboxylic acid having two reactive groups and a molecular weight less than 300 as the acid component of the copolyester.

Among long chain ester units, the long chain glycols are poly (alkylene oxide) glycols having terminal hydroxyl groups and a molecular weight of 400 - 4000, and having a carbon to oxygen ratio of 2.0 - 5.0.

Examples of the poly alkylene oxide include poly (ethylene oxide) glycol, poly (propylene oxide) glycol, poly (tetramethylene oxide) glycol.

Among the short chain ester units, the short chain diols to be used are low molecular weight diols having a molecular weight less than 300.

For example, aliphatic diols such as ethylene glycol, 1,4-butanediol, 1,6-hexanediol and other cyclodiols can be used.

The copolyester elastomer of the present invention is represented by the following general formula

$$-\overset{\overset{O}{\|}}{C}-R-\overset{\overset{O}{\|}}{C}-O-B-O- \qquad (I)$$

$$-\overset{\overset{O}{\|}}{C}-R-\overset{\overset{O}{\|}}{C}-O-G-O- \qquad (II)$$

The above general formula (I) refers to hard segment and provides mechanical physical properties of the resin and general formula (II) refers to soft segment and provides elasticity and flexibility of the resin.

In the above formulae, R is a dicarboxylic acid. The present invention employed a dimethyl terephthalate as a dicarboxylic acid. In the above formula (I), B refers to short chain diols and the present invention employed preferably 1,4-butanediol. In the above formula (II), G means long chain diols such as represented by the formula (III) shown below and it is added to an amount of 0.05 to 0.3 mole per mole of dicarboxylic acid.

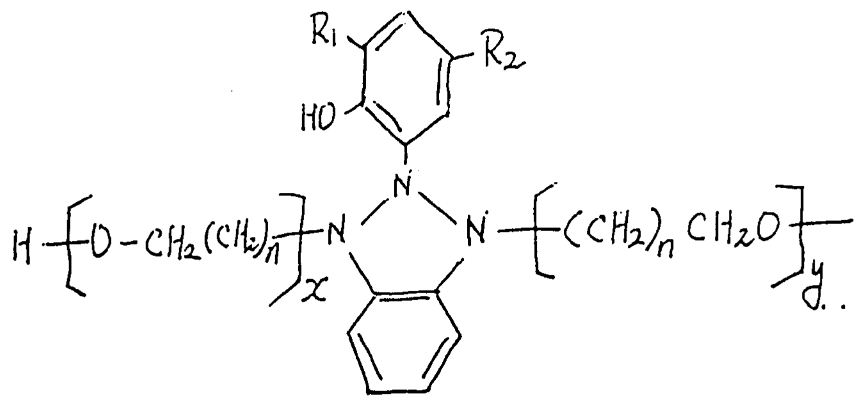

. . . . . . . . . (III)

In the above formula (III), the sum of x and y is 2 to 35, n is 1 to 5. $R_1$ ist alkyl containing 5-20 carbon atoms. $R_2$ is alkyl containing 1-5 carbon atoms.

The present invention employed both poly(tetra methylene oxide) glycol as long chain diols and 2-(2H-bezotriazole-2-yl)-4-methyl-6-dodecylphenol (commercially available Ciba-Geigy Co. product: Tynubin 571) as a light stabilizer to be linked with the polyether glycol.

The superior weather resistance of the copolyester prepared by the present invention can be demonstrated by the fact that 2-(2H-benzotriazole-2-yl)-4-methyl-6-dodecylphenol is linked to the main chain of polyether glycol in the molecular structure to absorb 250-500nm of decomposition wavelength of copolyester resin and thus the decomposition of the resin can be avoided. An elastomer of the invention used together with the cubically bulky phenol antioxidants, hindered amines and thio esters light-stabilizers can be shown remarkably superior weather resistance.

Besides the manufacturing process is shortened so that the manufacturing costs of the elastomer can be reduced.

EXAMPLE 1

A flask equipped with an agitator and distillation tower is charged with the following starting materials.

| | |
|---|---|
| dimethyl terephthalate | 100 parts |
| poly(tetramethyleneoxide)glycol | 103 parts |
| 1,4-butane diol | 74 parts |
| tetra butyl titanate | 0.5 parts |
| magnesium acetate | 0.1 parts |
| trimellitic acid anhydride | 0.9 parts |
| heat-antioxidant* | 0.4 parts |
| light-stabilizer** | 0.8 parts |

* heat-antioxidant: Irganox 1010
** light-stabilizer: 2-(2H-benzotriazole-2-yl)-4-methyl-6-dodecylphenol

All weight parts disclosed herein are based on 100 parts of dimethyl terephthalate.

The inner temperature of reaction flask is slowly raised form 140 °C to 200 °C over an hour and the reaction was completed when the methanol is no longer overflowed. Thereinafter, reactants were carried into a poly tube and then the poly tube was placed in an oil bath.

With stirring, the temperature was slowly raised from 210 °C to 240 °C. The pressure was slowly reduced to below 1 mmHg over 1 hour and then the reaction was completed and the degree of polymerization had reached the desired stage, the nitrogen gas was blown into the reactor.

The resulting viscous melting product thus obtained is shown to have a melt viscosity of about 1000-5000 poise at 230 °C and an intrinsic viscosity of 1.0 - 2.0.

This copolyester polymer was extruded into 4mm thick films and the film was cut to conform with the tensile strength test piece No. 3 of KS M6518. Thereafter, the test piece thus obtained was subjected to the weather resistance testing according to the ASTM G23 method. The reduction rate of tensile strength was measured by an hour and checked the time for the reduction rate of physical properties to be 50% of the

initial stage.

The results are shown in Table 1.

Comparative Examples 1-2

The following starting materials were charged in a flask equipped with an agitator and a distillation tower and subjected to polymerize in the same manner as shown in Example 1.

| Classification | Comparative Example 1 | Comparative Example 2 |
|---|---|---|
| dimethyl-terephthalate | 100 parts | 100 parts |
| poly(tetramethyloxide)-glycol | 103 parts | 103 parts |
| 1,4-butanediol | 74 parts | 74 parts |
| tetra butyltitanate | 0.5 parts | 0.5 parts |
| trimellitic acid anhydride | 0.9 parts | 0.9 parts |
| magnesium acetate | 0.1 parts | 0.1 parts |
| heat antioxidant* | 0.4 | 0.4 parts |
| light stabilizer** | - | 0.4 parts |

*heat antioxidant: Irganox 1010

** light-stabilizer: 2-(2H-benzotriazole-2-yl)-4-methyl-6-dodecylphenol

All weight parts disclosed herein are based on 100 parts of dimethyl terephthalate.

The resulting copolyester elastomer was extruded into and subjected to the weather resistance test in the same way as shown in Example 1. The results are shown in Table 1.

Table 1

| Classification | Initial tensile strength (kg/cm) | Tensile strength 50% reduction time (hr) |
|---|---|---|
| Example 1 | 280 | 280 |
| Comparative example 1 | 300 | 50 |
| Comparative example 2 | 290 | 200 |

As shown in the above Table 1, the copolyester elastomer of the invention shows superior weather resistance. In addition to this, the process of the invention is comprising the addition of reactants into the poly tube and it was found that this process shortened manufacturing steps and lowered manufacturing cost

as compared with the processes of the prior art.

Although preferred embodiments of the invention have been shown and described for illustrative purpose, it will be understood by those skilled in the art that various modifications, additions and substitutions are possible, without departing from the scope and spirit of the invention disclosed.

## Claims

1. A coplyester elastomer having superior weather resistance as prepared by the process that comprises copolymerizing a light stabilizer with a polyether glycol represented by the formula (I)

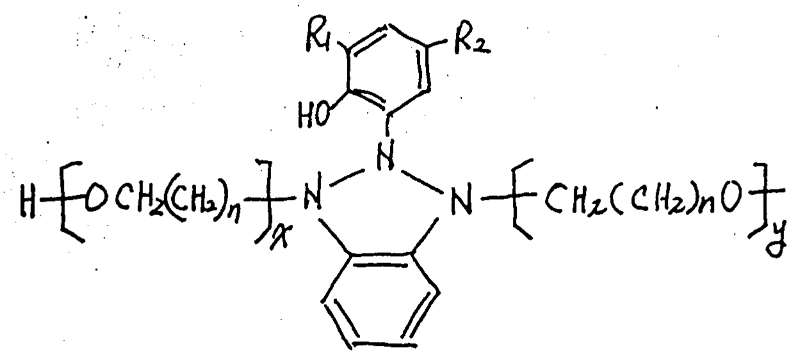

........(I)

wherein n is 1-5, the sum of x an y is 2 to 35, $R_1$ is alkyl containing 5-20 carbon atoms, and $R_2$ is alkyl containing 1-5 carbon atoms.

2. A copolyester elastomer as claimed in claim 1, wherein the polyether glycol is present in the range of 0.05 to 0.3 mole per mole of dimethyl terephthalate.

3. A copolyester elastomer as claimed in claim 1, wherein the stabilizer units are limited to an amount of 0.8-1.2 parts by weight per 100 parts by weight of dimethyl terephthalate.